# EUROPEAN PATENT APPLICATION

(11) **EP 4 193 831 A1**
(43) Date of publication of application: **14.06.2023**
(21) Application number: 22209572.1
(22) Date of filing: 25.11.2022
(51) Int. Cl.: A01K 1/01, A01K 11/00

(54) **PET TOILET AND METHOD FOR IDENTIFYING PET DEVICE**

(30) Priority: 10.12.2021 KR 20210176725
(71) Applicant: PurrSong, Inc., Daejeon 34138 (KR)
(72) Inventor: NOH, Tae Gu, 16422 Suwon-si, Gyeonggi-do (KR); SHIN, Eeon Chong, 08796 Seoul (KR); PARK, Jin Won, 08804 Seoul (KR); BAK, Chang Hyeon, 08806 Seoul (KR)
(74) Representative: BCKIP Part mbB

(57) **Abstract**

A pet toilet that identifies a pet device by using the pet device worn by a pet includes an electromagnetic signal receiver that receives a first electromagnetic signal including pet device information from a plurality of pet devices, a connection unit that is connected to at least one of the plurality of pet devices based on the strength of the received first electromagnetic signal, an electromagnetic signal transmitter that transmits a second electromagnetic signal to the at least one pet device, and an identification unit that identifies a specific pet device worn by a specific pet from the pet device information based on the strength of the second electromagnetic signal received by the at least one pet device from the at least one pet device.

## Description

### CROSS-REFERENCE TO RELATED APPLICATION

This application claims priority on Korean Patent Application No. 10- 2021-0176725 filed on December 10, 2021 in the Korean Intellectual Property Office.

### TECHNICAL FIELD

The present disclosure relates to a pet toilet and method for identifying a pet device by using the pet device worn by a pet.

### BACKGROUND

In general, pets are smaller in size than humans. Thus, it is difficult to use wearable devices used by humans for pets. Therefore, a pet wearable device needs to be small in size and it is important to ensure that the pet wearable device operates for a long time with a small battery capacity. To this end, a device operation algorithm for low power devices is needed.

Also, as the number of households keeping many pets has increased, the importance of object identification has recently increased to manage pets individually.

As a prior art related to object identification by a pet toilet, Japanese Patent Publication No. 2019-208483 discloses an animal identifying device and a method and program for controlling the animal identifying device.

According to the prior art, each signal transmitted from a transmission device worn by each animal is received, the strength of each signal (Received Signal Strength Indication (RSSI)) is acquired, and identity-determining signal information for identifying an animal is determined based on the acquired RSSI.

However, according to the prior art, the transmission device worn by each animal consistently transmits a signal and thus requires a large amount of power to operate.

Meanwhile, if the transmission device is configured as a low power device that transmits a signal at a long time interval, it is impossible to identify whether the transmission device transmits a signal during a short time while a pet uses s toilet or the transmission device of a pet around the toilet transmits a signal. Therefore, it is difficult to accurately identify the pet that has used the toilet.

### PRIOR ART DOCUMENT

### [Patent Document]

(Patent Document 1) Japanese Patent Publication No. 2019-208483 (published on December 12, 2019)

### SUMMARY

The present disclosure provides a pet toilet and method for identifying a pet device by using the pet device worn by a pet.

However, the problems to be solved by the present disclosure are not limited to the above-described problems. There may be other problems to be solved by the present disclosure.

As a means for solving the problems, according to an aspect of the present disclosure, a pet toilet that identifies a pet device by using the pet device worn by a pet, comprises an electromagnetic signal receiver that receives a first electromagnetic signal including pet device information from a plurality of pet devices, a connection unit that is connected to at least one of the plurality of pet devices based on the strength of the received first electromagnetic signal, an electromagnetic signal transmitter that transmits a second electromagnetic signal to the at least one pet device, and an identification unit that identifies a specific pet device worn by a specific pet from the pet device information based on the strength of the second electromagnetic signal received by the at least one pet device from the at least one pet device.

According to another aspect of the present disclosure, a method of identifying a pet device by using the pet device worn by a pet and a pet toilet comprises receiving a first electromagnetic signal including pet device information from a plurality of pet devices, connecting to at least one of the plurality of pet devices based on the strength of the received first electromagnetic signal, transmitting a second electromagnetic signal to the at least one pet device, and identifying a specific pet device worn by a specific pet from the pet device information based on the strength of the second electromagnetic signal received by the at least one pet device from the at least one pet device.

According to yet another aspect of the present disclosure, a pet device worn by a pet comprises an electromagnetic signal transmitter that transmits a first electromagnetic signal including pet device information to a pet toilet, a connection unit that is connected to the pet toilet in response to a request for connection from the pet toilet, an electromagnetic signal receiver that receives a second electromagnetic signal from the pet toilet, and an electromagnetic signal strength transmitter that transmits the strength of the second electromagnetic signal received from the pet toilet, wherein the pet device worn by the pet is specified from the pet device information based on the strength of the second electromagnetic signal, and the pet using the pet toilet is identified based on the pet device information.

The above-described aspects are provided by way of illustration only and should not be construed as liming the present disclosure. Besides the above-described embodiments, there may be additional embodiments described in the accompanying drawings and the detailed description.

According to the present disclosure, a pet device worn by a pet transmits electromagnetic signals at different time intervals before and after connection to a pet toilet. Thus, the pet device can be easily identified and can operate with low power consumption.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG. 1** is a diagram schematically illustrating a pet device identification system according to an embodiment of the present disclosure.
**FIG. 2** is a configuration view of a pet toilet according to an embodiment of the present disclosure.
**FIG. 3A** is a diagram provided for explaining configurations of pet toilets according to various embodiments of the present disclosure.
**FIG. 3B** is a diagram provided for explaining configurations of pet toilets according to various embodiments of the present disclosure.
**FIG. 4A** is a diagram provided for explaining configurations of pet toilets according to various embodiments of the present disclosure.
**FIG. 4B** is a diagram provided for explaining configurations of pet toilets according to various embodiments of the present disclosure.
**FIG. 5** is a configuration view of a pet device according to an embodiment of the present disclosure.
**FIG. 6** is a diagram provided for explaining movement recording data stored in a database of the pet device according to an embodiment of the present disclosure.
**FIG. 7** is a sequence chart provided for explaining a method of identifying the pet device by the pet toilet in the pet device identification system according to an embodiment of the present disclosure.
**FIG. 8A** is a diagram provided for explaining a method of identifying pet devices by the pet toilet according to an embodiment of the present disclosure.
**FIG. 8B** is a diagram provided for explaining a method of identifying pet devices by the pet toilet according to an embodiment of the present disclosure.
**FIG. 8C** is a diagram provided for explaining a method of identifying pet devices by the pet toilet according to an embodiment of the present disclosure.
**FIG. 9** is a diagram provided for explaining a method of structuring information received by a pet management server from the pet toilet in the pet device identification system according to an embodiment of the present disclosure.
**FIG. 10** is a diagram provided for explaining information previously stored in the pet management server according to an embodiment of the present disclosure.
**FIG. 11** is a diagram provided for explaining a method of re-identifying a pet device by using a measured weight in the case where the pet device is incorrectly worn according to an embodiment of the present disclosure.
**FIG. 12A** is a diagram showing an example of an application provided by a user device according to an embodiment of the present disclosure.
**FIG. 12B** is a diagram showing an example of an application provided by a user device according to an embodiment of the present disclosure.
**FIG. 12C** is a diagram showing an example of an application provided by a user device according to an embodiment of the present disclosure.
**FIG. 12D** is a diagram showing an example of an application provided by a user device according to an embodiment of the present disclosure.
**FIG. 13** is a flowchart showing a method of identifying a pet device by a pet toilet according to an embodiment of the present disclosure.

### DETAILED DESCRIPTION

Hereafter, embodiments of the present disclosure will be described in detail with reference to the accompanying drawings so that the present disclosure may be readily implemented by a person with ordinary skill in the art. However, it is to be noted that the present disclosure is not limited to the embodiments but may be embodied in various other ways. In drawings, parts irrelevant to the description are omitted for the simplicity of explanation, and like reference numerals denote like parts through the whole document.

Throughout this document, the term "connected to" may be used to designate a connection or coupling of one element to another element and includes both an element being "directly connected" another element and an element being "electronically connected" to another element via another element. Further, it is to be understood that the terms "comprises," "includes," "comprising," and/or "including" means that one or more other components, steps, operations, and/or elements are not excluded from the described and recited systems, devices, apparatuses, and methods unless context dictates otherwise; and is not intended to preclude the possibility that one or more other components, steps, operations, parts, or combinations thereof may exist or may be added.

Throughout this document, the term "unit" may refer to a unit implemented by hardware, software, and/or a combination thereof. As examples only, one unit may be implemented by two or more pieces of hardware or two or more units may be implemented by one piece of hardware. However, the "unit" is not limited to the software or the hardware and may be stored in an addressable storage medium or may be configured to implement one or more processors.

Throughout this document, a part of an operation or function described as being carried out by a terminal or device may be implemented or executed by a server connected to the terminal or device. Likewise, a part of an operation or function described as being implemented or executed by a server may be so implemented or executed by a terminal or device connected to the server.

Hereinafter, embodiments of the present disclosure will be explained in detail with reference to the accompanying drawings.

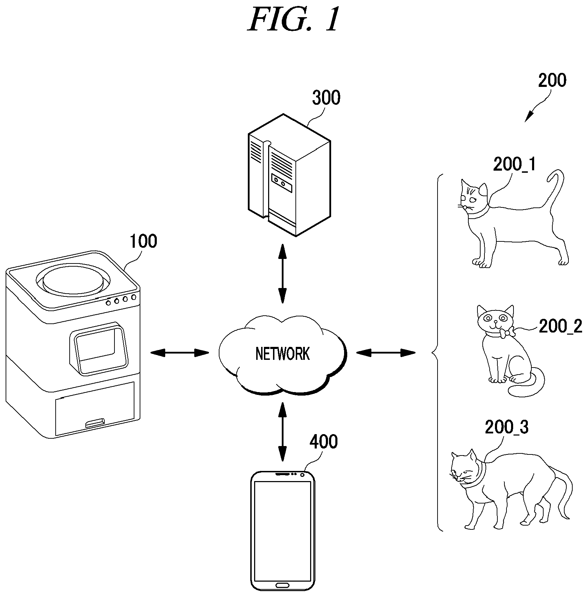

**FIG. 1** is a diagram schematically illustrating a pet device identification system according to an embodiment of the present disclosure.

Referring to **FIG. 1**, a pet device identification system 1 may include a pet toilet 100, a pet device 200, a pet management server 300 and a user device 400. However, the pet device identification system 1 illustrated in **FIG. 1** is just an embodiment of the present disclosure and should not be construed as liming the present disclosure and can be configured differently from that shown in **FIG. 1** according to various embodiments of the present disclosure.

In general, the components of the pet device identification system 1 illustrated in **FIG. 1** can be connected to each other through a network. Further, the term "network" refers to a connection structure that enables information exchange between nodes such as devices, servers, etc. and examples of the network include 3GPP (3rd Generation Partnership Project), LTE (Long Term Evolution), WIMAX (World Interoperability for Microwave Access), Wi-Fi, 3G, 4G, 5G and short-range wireless communication such as RFID (Radio Frequency Identification), Bluetooth, NFC (Near Field Communication), Beacon, etc., but the present disclosure is not limited thereto.

The pet toilet 100 serves as an excretion space where a pet such as a cat can defecate, and may be configured to have a container with an open top where sand is loaded, or may be configured to have an excretion chamber which is enclosed by surfaces except one side surface and in which a pet can be accommodated as illustrated in **FIG. 1**, but is not limited thereto.

The pet toilet 100 may include a shielding space formed in part by shielding surfaces that shield electromagnetic signals, an antenna located inside the shielding space and a main board located inside or outside the shielding space.

For example, the pet toilet 100 may include a shielding space formed by shielding surfaces that shield electromagnetic signals except a first side surface among a plurality of side surfaces, an antenna located inside the shielding space and a main board located outside the shielding space.

For another example, the pet toilet 100 may include a shielding space formed by a plurality of side surfaces serving as shielding surfaces that shield electromagnetic signals, an antenna located inside the shielding space and a main board located inside the shielding space.

In this case, the antenna may be located on a first surface among a top surface and a bottom surface and may transmit a second electromagnetic signal in a direction from the first surface toward a second surface among the top surface and the bottom surface.

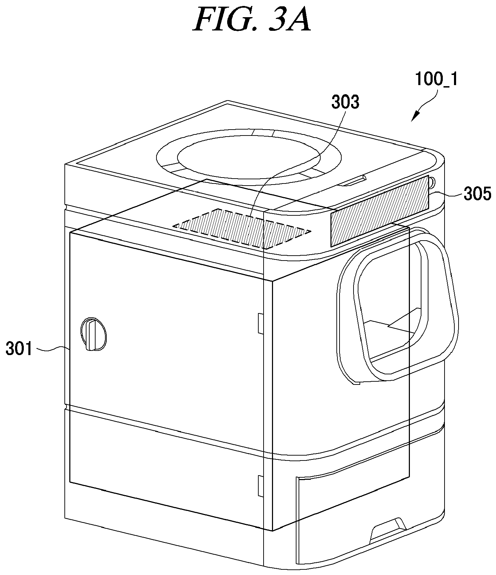

The configuration of the pet toilet 100 will be described with reference to **FIG. 3A** to **FIG. 4B****.**

The pet toilet 100 may identify the pet device 200 by using the pet device 200 worn by a pet.

Specifically, the pet toilet 100 may receive a first electromagnetic signal including pet device information from a plurality of pet devices 200_1, 200_2 and 200_3 and may be connected to at least one of the plurality of pet devices 200_1, 200_2 and 200_3 based on the received first electromagnetic signal.

Then, the pet toilet 100 may transmit a second electromagnetic signal to the at least one connected pet device and may identify a specific pet device worn by a specific pet from the pet device information based on whether the strength of the second electromagnetic signal received by the at least one pet device is within a predetermined range from the at least one pet device.

The plurality of pet devices 200_1, 200_2 and 200_3 may be worn by a plurality of pets, respectively, and may be wearable devices such as collars or harnesses, but is not limited thereto. The pet device information including at least one of an identifier of each pet device, whether the pet device has been registered, whether the pet device operates normally and the number of movement recording data may be regularly updated and stored in the plurality of pet devices 200_1, 200_2 and 200_3.

Further, the plurality of pet devices 200_1, 200_2 and 200_3 may record movement information of the pets wearing the respective pet devices 200 in real time.

The pet device 200 may transmit a first electromagnetic signal including the pet device information to the pet toilet 100 and may be connected to the pet toilet 100 in response to a request for connection. Also, the pet device 200 may receive a second electromagnetic signal from the pet toilet 100 and transmit the strength of the second electromagnetic signal to the pet toilet 100.

Accordingly, a specific pet device worn by a specific pet can be specified from the pet device information based on whether the strength of the second electromagnetic signal is within a predetermined range.

Furthermore, the pet management server 300 may identify a pet using the pet toilet 100 based on the pet device information.

In this case, the pet device 200 may transmit a first electromagnetic signal to the pet toilet 100 at a first time interval before connection to the pet toilet 100 and may transmit a third electromagnetic signal to the pet toilet 100 at a second time interval, which is shorter than the first time interval, after connection to the pet toilet 100. Herein, the third electromagnetic signal may include movement information of the pet wearing the pet device 200.

Pet registration information of each of a plurality of pets kept by a user may be previously stored in the pet management server 300. The pet registration information may be previously input from the user device 400 through an application managed by the pet management server 300.

The pet management server 300 may manage previously registered pets by using information received from the pet toilet 100. In this case, the pet management server 300 may receive at least one of pet device information, movement information and excretion information from the pet toilet 100. The pet management server 300 may analyze and store the information received from the pet toilet 100.

Herein, the pet device information may include at least one of an identifier of the pet device 200, whether the pet device 200 has been registered, whether the pet device 200 operates normally and the number of movement recording data. Also, the movement information may be obtained by recording movements of the pet wearing the pet device 200. Further, the excretion information may include at least one of an entry time to the pet toilet 100, an exit time, a stay time, a measured weight and the amount of excretion of the pet wearing the pet device 200.

The pet management server 300 may identify a specific pet using the pet toilet 100 based on the pet device information received from the pet toilet 100 and the previously stored pet registration information.

When excretion information of a first pet identified as the specific pet is more similar to an excretion pattern of a second pet than that of the first pet, the pet management server 300 may re-identify the second pet as the specific pet.

When the weight of the first pet identified as the specific pet is more similar to the weight of the second pet than that of the first pet, the pet management server 300 may re-identify the second pet as the specific pet.

For a predetermined period of time after the second pet is re-identified as the specific pet, the pet management server 300 may exchange movement information of the first pet and movement information of the second pet and store them. Herein, the predetermined period of time refers to a period until the user exchanges the pet devices of the second pet and the specific pet and puts the pet devices on the respective pets after the second pet is re-identified as the specific pet. Alternatively, the predetermined period of time refers to a period until the user exchanges the pet devices of the second pet and the specific pet and puts the pet devices on the respective pets after the pet devices of the second pet and the specific pet are interchanged and put on.

The pet management server 300 may provide the analyzed information to the user device 400.

The user device 400 is a device capable of wireless communication. The user device 400 may include any of various types of devices. For example, the user device 400 may be a portable device that can be connected to a remote server through a network. Herein, examples of the portable device are wireless communication devices that ensure portability and mobility and may include all kinds of handheld-based wireless communication devices such as PCS (Personal Communication System), GSM (Global System for Mobile communications), PDC (Personal Digital Cellular), PHS (Personal Handyphone System), PDA (Personal Digital Assistant), IMT (International Mobile Telecommunication)-2000, CDMA (Code Division Multiple Access)-2000, W-CDMA (W-Code Division Multiple Access), WiBro (Wireless Broadband Internet) device, smart phone, tablet PC, and the like. However, the user device 400 is not limited to that illustrated in **FIG. 1** or those described above.

The user device 400 may be a device held by a user who keeps at least one pet, and may be configured to receive movement information and excretion information of a pet from the pet management server 300 and output them. Accordingly, the user may access an application through the user device 400 and check movement information and excretion information of a plurality of his/her pets.

According to an embodiment of the present disclosure, the pet device 200 transmits the first electromagnetic signal to the pet toilet 100 at the first time interval before connection to the pet toilet 100 and transmits the third electromagnetic signal to the pet toilet 100 at the second time interval, which is shorter than the first time interval, after connection to the pet toilet 100. Thus, the pet device 200 communicates with the pet toilet 100 by a low power communication method. Therefore, the pet device 200 can be used for a long time without being recharged.

Also, the pet toilet 100 is configured as a shielding space formed by shielding surfaces that shield electromagnetic signals and identifies the pet device 200 based on the strength of an electromagnetic signal transmitted from an antenna located inside the shielding space to the pet device 200. Therefore, it is possible to improve accuracy in identifying the pet device 200.

Hereinafter, an operation of each component of the pet device identification system illustrated in **FIG. 1** will be described in more detail.

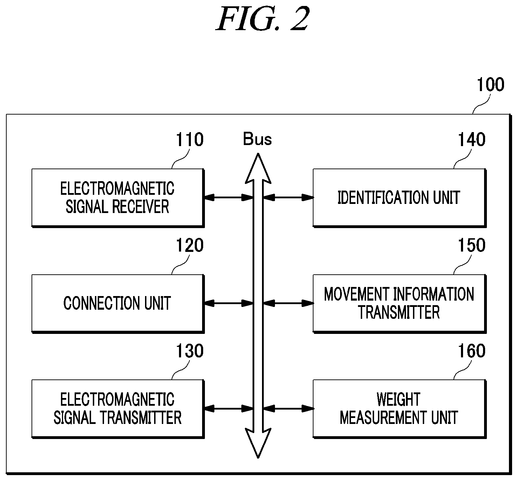

**FIG. 2** is a configuration view of a pet toilet according to an embodiment of the present disclosure.

Referring to **FIG. 2**, the pet toilet 100 according to an embodiment of the present disclosure may include an electromagnetic signal receiver 110, a connection unit 120, an electromagnetic signal transmitter 130, an identification unit 140, a movement information transmitter 150 and a weight measurement unit 160. However, the pet toilet 100 illustrated in **FIG. 2** is merely an embodiment of the present disclosure, and various modifications based on the components illustrated in **FIG. 2** are possible.

The electromagnetic signal receiver 110 may receive a first electromagnetic signal including pet device information from the plurality of pet devices 200_1, 200_2 and 200_3. Herein, the pet device information may include at least one of an identifier of the pet device, whether the pet device has been registered, whether the pet device operates normally and the number of movement recording data.

In this case, the electromagnetic signal receiver 110 may receive the first electromagnetic signal from the plurality of pet devices 200_1, 200_2 and 200_3, and may also receive the first electromagnetic signal from the plurality of pet devices 200_1, 200_2 and 200_3 when the weight measurement unit 160 senses a pet by means of a weight sensor.

The connection unit 120 may be connected to at least one of the plurality of pet devices 200_1, 200_2 and 200_3 based on the strength of the received first electromagnetic signal (first connection).

Specifically, when the strength of the first electromagnetic signal received from the pet device satisfies a predetermined condition, the connection unit 120 may be connected to at least one of the plurality of pet devices 200_1, 200_2 and 200_3. For example, the connection unit 120 may be connected to at least one of the plurality of pet devices 200_1, 200_2 and 200_3 by checking whether the strength of the first electromagnetic signal received from the pet device is equal to or higher than a specific level of strength.

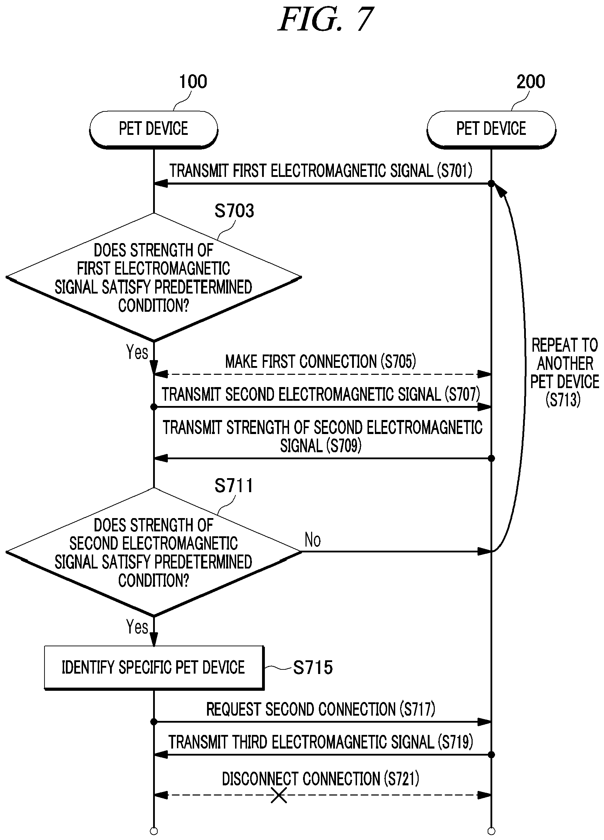

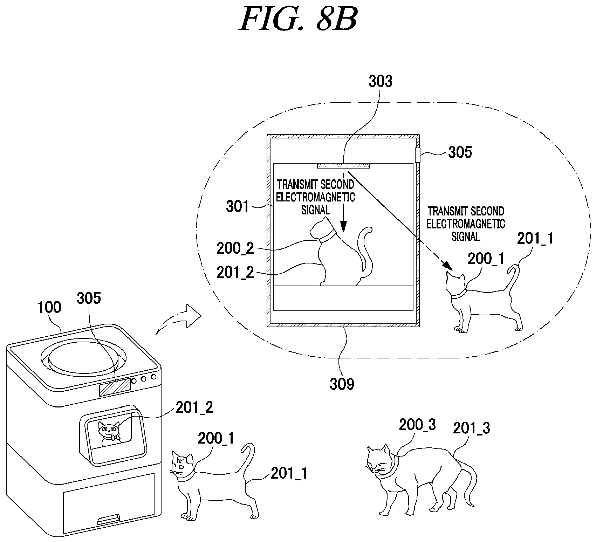

In an embodiment, the connection unit 120 may be sequentially connected to at least one of the pet devices from which the strength of the first electromagnetic signal satisfies the predetermined condition. This will be described in detail with reference to **FIG. 7** and **FIG. 8B****.**

The electromagnetic signal transmitter 130 may transmit a second electromagnetic signal to the at least one connected pet device. In this case, the electromagnetic signal transmitter 130 may be configured as an antenna and may consistently transmit the second electromagnetic signal to the pet device 200 or may transmit the second electromagnetic signal to the pet device 200 when it is connected to the pet device 200.

The identification unit 140 may identify a specific pet device worn by a specific pet from the pet device information based on whether the strength of the second electromagnetic signal received by the at least one pet device is within a predetermined range from the at least one pet device.

When the identification unit 140 identifies the specific pet device, the connection unit 120 may request a second connection from the identified specific pet device to receive movement information from the identified specific pet device. In this case, the electromagnetic signal receiver 110 may receive a third electromagnetic signal including movement information from the identified specific pet device. Herein, the movement information may be data recorded by measuring movements of the pet wearing the pet device by means of a sensor.

In an embodiment, the connection unit 120 may request a second connection from the identified specific pet device based on the pet device information included in the first electromagnetic signal.

Specifically, the connection unit 120 may request a second connection from the identified specific pet device based on the number of movement recording data included in the pet device information. For example, when the number of movement recording data in the pet device information is 0, i.e., when the pet device information does not include a predetermined amount of movement recording data, the connection unit 120 may not request a second connection from the identified specific pet device and may transmit only the pet device information received from the identified specific pet device to the pet management server 300.

The weight measurement unit 160 may measure the weight of a pet by means of the weight sensor. Also, the weight measurement unit 160 may sense an entry and exit of the pet by using the measured weight.

The movement information transmitter 150 may transmit excretion information and movement information of a specific pet to the pet management server 300. Herein, the excretion information may include at least one of an entry time to the pet toilet 100, an exit time, a stay time, the amount of excretion and a measured weight.

Specifically, when it is determined that the pet wearing the identified specific pet device exits from the pet toilet 100, the movement information transmitter 150 may transmit excretion information and movement information of the specific pet to the pet management server 300. For example, the movement information transmitter 150 may determine whether the pet wearing the identified specific pet device has finished using the pet toilet 100 based on the weight measured by means of the weight measurement unit 160.

When excretion information of a first pet identified as the specific pet is more similar to an excretion pattern of a second pet than that of the first pet, the pet management server 300 may re-identify the second pet as the specific pet.

When the weight of the first pet identified as the specific pet is more similar to the weight of the second pet than that of the first pet, the pet management server 300 may re-identify the second pet as the specific pet.

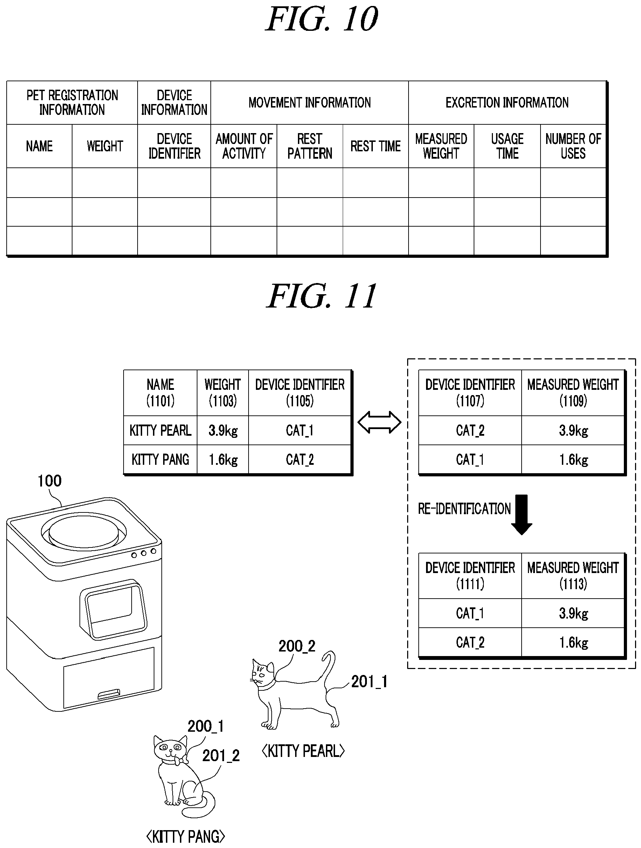

For a predetermined period of time after the second pet is re-identified as the specific pet, movement information of the first pet and movement information of the second pet may be exchanged and stored. This will be described in more detail with reference to **FIG. 11****.**

**FIG. 3A** to **FIG. 4B** are diagrams provided for explaining configurations of pet toilets according to various embodiments of the present disclosure.

As described above with reference to **FIG. 1**, the pet toilet 100 may include a shielding space formed in part by shielding surfaces that shield electromagnetic signals, an antenna located inside the shielding space and a main board located inside or outside the shielding space.

In an embodiment, the pet toilet 100 may include a shielding space formed by shielding surfaces that shield electromagnetic signals except a first side surface among a plurality of side surfaces, an antenna located inside the shielding space and including the electromagnetic signal transmitter 130, and a main board located outside the shielding space and including the electromagnetic signal receiver 110, the connection unit 120 and the identification unit 140. The antenna may be located on a first surface among a top surface and a bottom surface and may transmit a second electromagnetic signal in a direction from the first surface toward a second surface among the top surface and the bottom surface.

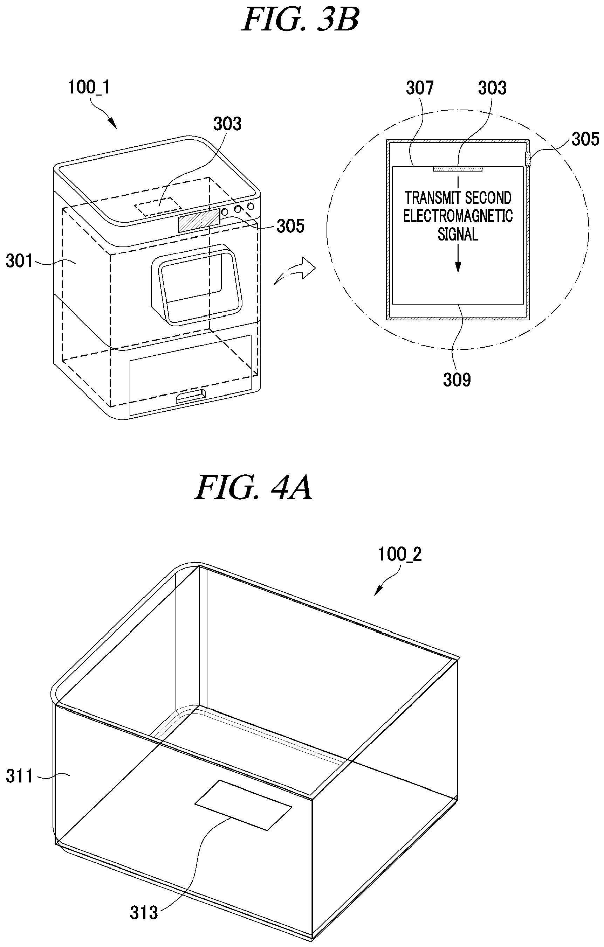

For example, referring to **FIG. 3A** and **FIG. 3B**, a pet toilet 100_1 according to an embodiment of the present disclosure may include a shielding space 301, an antenna 303 and a main board 305. As illustrated in **FIG. 3A**, the shielding space 301 may be formed by shielding surfaces that shield electromagnetic signals except a front surface having an entrance allowing a pet to enter and exit, and the antenna 303 may be located on the internal top surface of the shielding space 301. Also, the main board 305 may be located outside the shielding space 301. In this case, the antenna 303 may be located on a top surface 307 and may transmit a second electromagnetic signal in a direction from the top surface 307 toward a bottom surface 309 as illustrated in **FIG. 3B****.**

In another embodiment, the pet toilet 100 may include a shielding space formed by a plurality of side surfaces serving as shielding surfaces that shield electromagnetic signals, an antenna located inside the shielding space and including the electromagnetic signal transmitter 130, and a main board located inside the shielding space and including the electromagnetic signal receiver 110, the connection unit 120 and the identification unit 140. The antenna may be located on a first surface among a top surface and a bottom surface and may transmit a second electromagnetic signal in a direction from the first surface toward a second surface among the top surface and the bottom surface.

For example, referring to **FIG. 4A**, a pet toilet 100_2 according to another embodiment of the present disclosure may include a shielding space 311, an antenna and a main board 313.

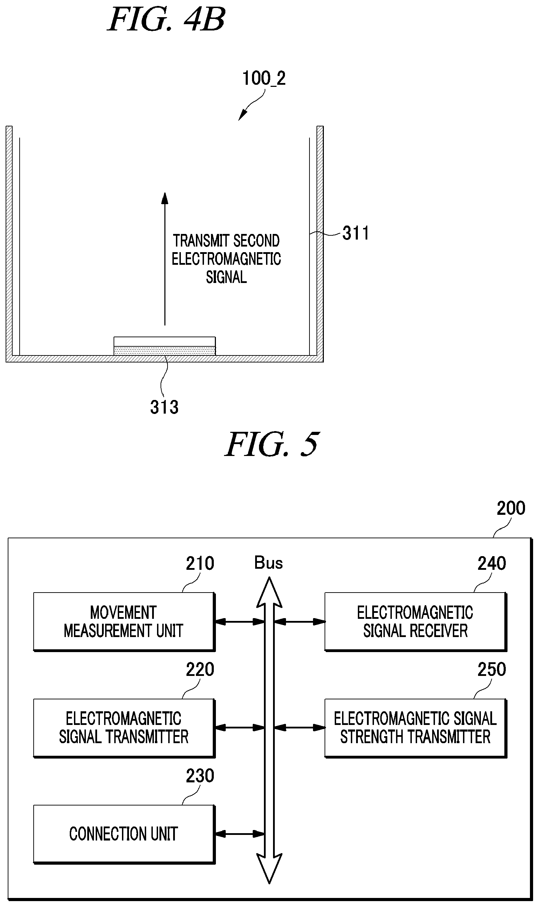

The pet toilet 100_2 may be configured to have a container with an open top and the shielding space 311 may be formed by shielding surfaces that shield electromagnetic signals except a top surface and a bottom surface. Also, the antenna and the main board 313 may be located on the internal bottom surface of the shielding space. In this case, the antenna and the main board 313 may transmit a second electromagnetic signal in a direction from the bottom surface toward the top surface as illustrated in **FIG. 4B****.**

Although not illustrated in **FIG. 3A** to **FIG. 4B**,various sensors including a weight sensor of the weight measurement unit 160 may be provided inside the pet toilet 100.

**FIG. 5** is a configuration view of a pet device according to an embodiment of the present disclosure.

Referring to **FIG. 5A**, the pet device 200 according to an embodiment of the present disclosure may include a movement measurement unit 210, an electromagnetic signal transmitter 220, a connection unit 230, an electromagnetic signal receiver 240 and an electromagnetic signal strength transmitter 250. However, the pet device 200 illustrated in **FIG. 5** is merely an embodiment of the present disclosure, and various modifications based on the components illustrated in **FIG. 5** are possible.

The movement measurement unit 210 may measure movement information of a pet. Herein, the movement measurement unit 210 may be configured as a triaxial acceleration sensor, and the movement information may include triaxial acceleration information by time.

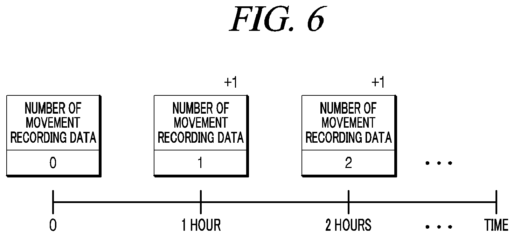

The movement measurement unit 210 may record sensor data about movement information of the pet wearing the pet device as time sequential data in a database (not shown). This will be described in detail with reference to **FIG. 6****.**

**FIG. 6** is a diagram provided for explaining movement recording data stored in a database of the pet device according to an embodiment of the present disclosure.

First, pet device information and movement information may be stored in the database. Herein, the pet device information may include at least one of an identifier of a pet device, whether the pet device has been registered, whether the pet device operates normally and the number of movement recording data. Herein, the number of movement recording data may refer to the number of movement recording data accumulated by a predetermined time unit and stored.

Referring to **FIG. 6**, the database may record sensor data about movement information of the pet measured by means of the movement measurement unit 210 as time sequential data in real time, and may accumulate and record movement recording data by a predetermined time unit.

For example, as illustrated in **FIG. 6**, movement recording data according to measured movement information may be stored hourly in the database. In this case, the number of movement recording data may be counted as 1 per hour. Also, when the movement information is transmitted to the pet toilet 100, the movement information and the number of movement recording data stored in the database are initialized and movement information may be recorded again right after transmission.

Referring back to **FIG. 5**, the electromagnetic signal transmitter 220 may transmit a first electromagnetic signal including pet device information to the pet toilet 100. Herein, the pet device information may include at least one of an identifier of a pet device, whether the pet device has been registered, whether the pet device operates normally and the number of movement recording data.

The connection unit 230 may be connected to the pet toilet 100 in response to a request for connection from the pet toilet 100.

The electromagnetic signal receiver 240 may receive a second electromagnetic signal from the pet toilet 100.

The electromagnetic signal strength transmitter 250 may transmit the strength of the second electromagnetic signal received from the pet toilet 100.

In this case, the pet toilet 100 may specify a pet device worn by a pet based on whether the strength of the second electromagnetic signal is within a predetermined range.

In this case, the pet management server 300 may identify the pet using the pet toilet 100 based on the pet device information.

The electromagnetic signal transmitter 220 may transmit a first electromagnetic signal to the pet toilet 100 at a first time interval before connection to the pet toilet 100 and may be connected to the pet toilet 100 (first connection). Then, the electromagnetic signal transmitter 220 may transmit a third electromagnetic signal to the pet toilet 100 at a second time interval, which is shorter than the first time interval (second connection). That is, the electromagnetic signal transmitter 220 usually transmits the first electromagnetic signal the pet toilet 100 at a longer time interval than the third electromagnetic signal to minimize power consumption, and after pet device 200 is connected to the pet toilet 100, the electromagnetic signal transmitter 220 communicates with the pet toilet 100 by transmitting the third electromagnetic signal at a shorter time interval than the first electromagnetic signal to maintain connection stability and improve accuracy in identifying a pet.

In this case, the third electromagnetic signal may include movement information. When the electromagnetic signal transmitter 220 transmits the third electromagnetic signal including movement information, the movement information and the number of movement recording data may be initialized as described above.

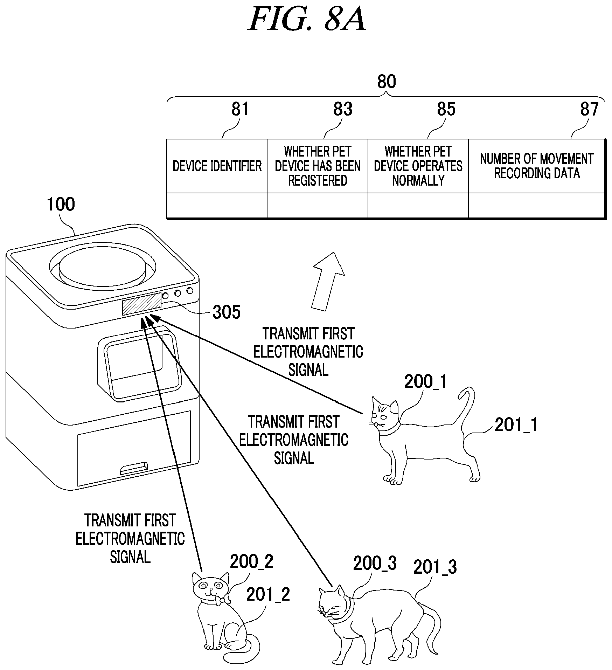

**FIG. 7** is a sequence chart provided for explaining a method of identifying the pet device by the pet toilet in the pet device identification system according to an embodiment of the present disclosure. **FIG. 8A** to **FIG. 8C** are diagrams provided for explaining a method of identifying pet devices by the pet toilet according to an embodiment of the present disclosure.

Hereinafter, **FIG. 7** will be described with reference to **FIG. 8A** to **FIG. 8C****.**

First, the pet device 200 may transmit a first electromagnetic signal to the pet toilet 100 (S701). In this case, the first electromagnetic signal may include pet device information. Herein, the pet device information may include at least one of an identifier of a pet device, whether the pet device has been registered, whether the pet device operates normally and the number of movement recording data.

For example, referring to **FIG. 8A**, there may be a plurality of pet devices 201_1, 201_2 and 201_3 wearing the plurality of pet devices 200_1, 200_2 and 200_3, respectively, around the pet toilet 100. In this case, **FIG. 8A** illustrates that the first pet 201_1 wears the first pet device 200_1, the second pet 201_2 wears the second pet device 200_2, and the third pet 201_3 wears the third pet device 200_3.

The first to third pet devices 200_1, 200_2 and 200_3 may transmit a first electromagnetic signal to the pet toilet 100. In this case, the first electromagnetic signal may include pet device information 80, and the pet device information 80 may include at least one of a device identifier 81, whether the pet device has been registered 83, whether the pet device operates normally 85 and the number of movement recording data 87. Herein, the first electromagnetic signal may be transmitted at a relatively long first time interval, which enables the pet device to operate with low power consumption.

In an embodiment, the pet toilet 100 may communicate with each of the pet devices 200_1, 200_2 and 200_3 via Bluetooth communication. Therefore, if the pet toilet 100 is present within a predetermined range from a position of a pet device, the pet device may transmit a first electromagnetic signal to the pet toilet 100.

In this case, the pet toilet 100 may receive the first electromagnetic signal including the pet device information 80 from the first to third pet devices 200_1, 200_2 and 200_3. Specifically, the pet toilet 100 may receive the first electromagnetic signal through the main board 305.

Referring back to **FIG. 7**, the pet toilet 100 may determine whether the strength of the received first electromagnetic signal satisfies a predetermined condition (S703).

For example, referring to **FIG. 8B**, when the pet toilet 100 receives the first electromagnetic signal through the main board 305, the pet toilet 100 may determine whether it is connected to at least one of the first to third pet devices 200_1, 200_2 and 200_3 based on the strength of the first electromagnetic signal. For example, when the strength of the first electromagnetic signal is equal to or higher than a specific value, the pet toilet 100 may determine that the strength of the first electromagnetic signal satisfies the predetermined condition.

If the strength of the first electromagnetic signal satisfies the predetermined condition (S703, Yes), the pet toilet 100 may make a first connection to the pet device 200 (S705).

For example, it may be assumed that the second pet 201_2 wearing the second pet device 200_2 enters the pet toilet 100 as illustrated in **FIG. 8B****.** Herein, it may be assumed that the strengths of the first electromagnetic signals received from the first pet device 200_1 and the second pet device 200_2 satisfy the predetermined condition.

In this case, the pet toilet 100 may be connected to the pet devices in the order in which the strength of the first electromagnetic signal satisfies the predetermined condition. Herein, if the pet toilet 100 receives the first electromagnetic signal sequentially from the first to third pet devices 200_1, 200_2 and 200_3, the pet toilet 100 may determine whether the strength of each first electromagnetic signal satisfies the predetermined condition in the order of receiving the first electromagnetic signal. For example, when the strength of the first electromagnetic signal received from the first pet device 200_1 is equal to or higher than a specific value, the pet toilet 100 may be first connected to the first pet device 200_1.

Otherwise, the pet toilet 100 may select a pet device that transmits a first electromagnetic signal with the highest strength based on the strength of the received first electromagnetic signal and may be connected thereto, and may select pet devices in a predetermined order of priority and may be connected thereto.

Then, the pet toilet 100 may transmit a second electromagnetic signal to the pet device 200 (S707). In this case, the pet toilet 100 may transmit, to the pet device 200, the second electromagnetic signal that requests the strength of the second electromagnetic signal received by the pet device 200.

Thereafter, the pet device 200 may transmit the strength of the received second electromagnetic signal to the pet toilet 100 (S709).

Then, the pet toilet 100 may determine whether the strength of the second electromagnetic signal received from the pet device 200 is within a predetermined range (S711). Herein, the predetermined range may refer to a range of the strength of a second electromagnetic signal that can be detected from the inside of a pet toilet.

First, when it is determined that the strength of the second electromagnetic signal is not within the predetermined range (S711, No), the first connection may be disconnected and the process may be repeated to another pet device 200 (S713).

That is, as illustrated in **FIG. 8B**, in a state where the second pet 201_2 is inside the pet toilet 100 and the pet toilet 100 has the first connection to the first pet device 200_1, the pet toilet 100 may transmit a second electromagnetic signal to the first pet device 200_1.

Also, when the pet toilet 100 transmits the second electromagnetic signal to the first pet device 200_1, the pet toilet 100 may receive the strength of the second electromagnetic signal from the first pet device 200_1.

As illustrated in **FIG. 3A** and **FIG. 3B**, the inside of the pet toilet 100 may be configured as the shielding space 301 whose some surfaces shield electromagnetic signals. Also, the pet toilet 100 transmits the second electromagnetic signal by means of the antenna 303 located inside the shielding space 301, and, thus, the strength of the second electromagnetic signal generated to the outside of the pet toilet 100 may be very weak. Therefore, even when the first pet device 200_1 located outside the pet toilet 100 has a first connection to the pet toilet 100, the strength of the second electromagnetic signal does not satisfy the condition and the first connection may be disconnected.

That is, when it is determined that the strength of the second electromagnetic signal received from the first pet device 200_1 is not within the predetermined range, the pet toilet 100 may not make a second connection to the first pet device 200_1 and may disconnect the first connection.

Then, the pet toilet 100 may repeat the same process to another pet device.

That is, as illustrated in **FIG. 8B**, the pet toilet 100 may receive a first electromagnetic signal from the second pet device 200_2, and when the strength of the first electromagnetic signal received from the second pet device 200_2 is equal to or higher than a specific value, the pet toilet 100 may make a first connection to the second pet device 200_2.

When the pet toilet 100 has the first connection to the second pet device 200_2, it may transmit a second electromagnetic signal to the second pet device 200_2.

Then, the pet toilet 100 that has transmitted the second electromagnetic signal to the second pet device 200_2 may receive the strength of the second electromagnetic signal from the second pet device 200_2.

In this case, the second pet device 200_2 is located in the shielding space 301 inside the pet toilet 100. Thus, the strength of the second electromagnetic signal may be within the predetermined range.

When it is determined that the strength of the second electromagnetic signal is within the predetermined range (S711, Yes), the pet toilet 100 may identify a specific pet device 200 wearing a specific pet device (S715).

That is, when the pet toilet 100 determines that the strength of the second electromagnetic signal received from the second pet device 200_2 is within the predetermined range, the pet toilet 100 may specify a specific pet that has entered the pet toilet 100 and identify a specific pet device worn by the specific pet. In other words, the pet toilet 100 may identify the second pet device 200_2 located inside the pet toilet 100.

When the pet device 200 is identified, the pet toilet 100 may request a second connection from the pet device 200 (S717). Specifically, the pet toilet 100 may request movement information of the pet wearing the pet device 200 by requesting the second connection from the pet device 200.

That is, the pet toilet 100 may request a second connection from the second pet device 200_2. This is to request movement information of the pet wearing the second pet device 200_2, and the pet toilet 100 may request the second connection from the second pet device 200_2 based on the pet device information 80 included in the first electromagnetic signal.

Specifically, the pet toilet 100 may request the second connection from the second pet device 200_2 based on the number of movement recording data 87 included in the pet device information 80. For example, when the number of movement recording data 87 is 0, i.e., when there is no movement recording data, the pet toilet 100 may not request the second connection and may transmit only the pet device information 80 to the server 300.

If the pet toilet 100 requests the second connection based only on the strength of second electromagnetic signal received from the connected second pet device 200_2, the second pet device 200_2 transmits a third electromagnetic signal at a second time interval, which is shorter than the first time interval. Therefore, power may be unnecessarily consumed.

Then, the pet device 200 may transmit a third electromagnetic signal to the pet toilet 100 (S719). In this case, the third electromagnetic signal may be transmitted at a shorter time interval than the first electromagnetic signal and may include movement information of the pet. Herein, the movement information may be movement recording data recorded right after the last time the pet wearing the pet device 200 used the pet toilet 100.

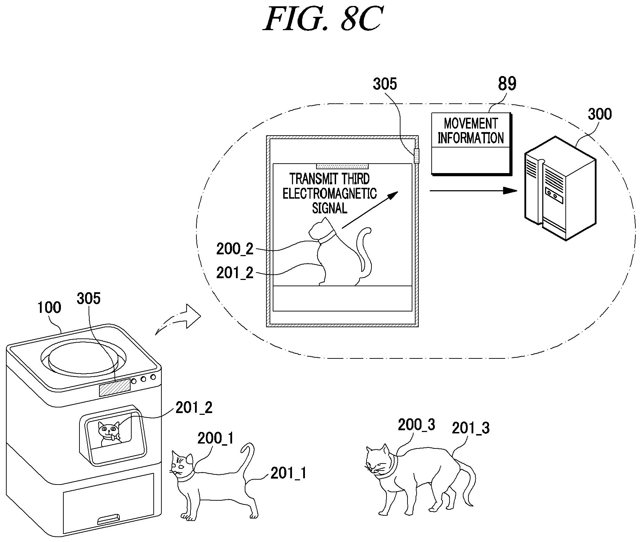

In response to the request for the second connection, the second pet device 200_2 may transmit the third electromagnetic signal to the pet toilet 100 as illustrated in **FIG. 8C****.** In this case, the third electromagnetic signal may include movement information 89 obtained by recording movements of the pet wearing the second pet device 200_2.

The pet toilet 100 may transmit the received movement information to the pet management server 300. The pet management server 300 may analyze the information and provide the analyzed information to the user device 400.

**The** pet toilet 100 may disconnect the connection to the pet device 200 after the elapse of a predetermine period of time from the receipt of the third electromagnetic signal (S721). For example, the pet toilet 100 may disconnect the connection to the pet device 200 right after receiving the movement information 89 through the third electromagnetic signal to suppress unnecessary consumption of power. Otherwise, the pet toilet 100 may disconnect the connection to the pet device 200 after determining that the second pet 201_2 exits from the pet toilet 100. For example, the pet toilet 100 may disconnect the connection to the pet device 200 when the weight of the second pet 201_2 is not detected by means of a weight measurement unit or another sensor or the strength of the third electromagnetic signal is not within the predetermined range (the strength of the third electromagnetic signal is sufficiently weak).

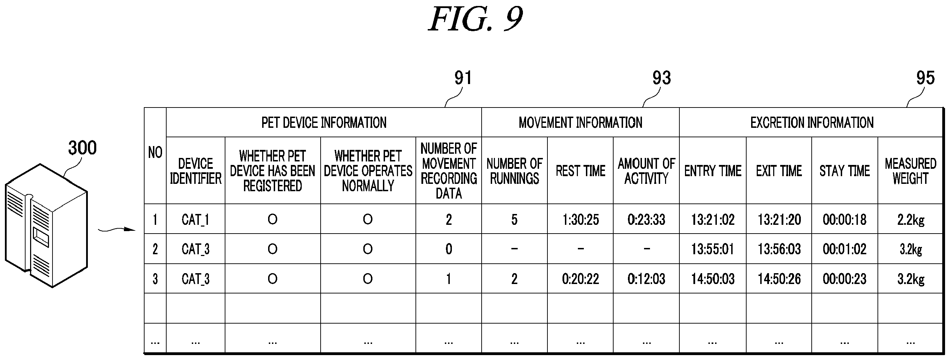

**FIG. 9** is a diagram provided for explaining a method of structuring information received by a pet management server from the pet toilet in the pet device identification system according to an embodiment of the present disclosure.

The pet toilet 100 may receive at least one of pet device information, movement information and excretion information from the identified pet device 200 and transmit the received information to the pet management server 300.

In this case, the pet management server 300 may classify the information in detail based on the information received from the pet toilet 100. As illustrated in **FIG. 9**, the pet management server 300 may classify the information into pet device information 91, movement information 93 and store metadata.

First, the pet management server 300 may classify the pet device information 91 into an identifier of a pet device, whether the pet device has been registered, whether the pet device operates normally and the number of movement recording data and record the information.

The pet management server 300 may classify a behavior by analyzing the movement information 93 and record information about the behavior. Specifically, the pet management server 300 may classify the movement information 93 into behaviors such as rest, running, etc. and record at least one of activity analysis, the amount of activity, a rest pattern, a rest time, the number of runnings and calorie analysis.

Further, the pet management server 300 may classify the received excretion information 95 into an entry time, an exit time, a stay time and a measured weight and record the information.

In this case, as described above with reference to **FIG. 7**, when the movement recording data including the pet device information 91 received from the pet device 200 is 0, the pet toilet 100 does not make a second connection and thus may not receive movement information.

In this case, the pet toilet 100 may transmit the pet device information91 and the excretion information 95 except the movement information 93 to the pet management server 300. The pet management server 300 may analyze only the pet device information91 and the excretion information 95 and record the result thereof in the database.

**FIG. 10** is a diagram provided for explaining information previously stored in the pet management server according to an embodiment of the present disclosure.

As described above with reference to **FIG. 9**, the pet management server 300 may use the data obtained by analyzing the information received from the pet toilet 100, match the data with the previously stored pet registration information and store them. Such information may be provided to the user device 400.

**FIG. 11** is a diagram provided for explaining a method of re-identifying a pet device by using a measured weight in the case where the pet device is incorrectly worn according to an embodiment of the present disclosure.

As illustrated in **FIG. 11**, a name 1101, a weight 1103 and a device identifier 1105 of a pet may be previously stored in the pet management server 300. In this case, it may be assumed that the first pet 201_1 by the name of "Kitty Pearl" with a weight of 3.9 kg is matched with the first pet device 200_1 assigned with a device identifier of "CAT_1" and stored in the pet management server 300 and the second pet 201_2 by the name of "Kitty Pang" with a weight of 1.6 kg is matched with the second pet device 200_2 assigned with a device identifier of "CAT_2" and stored in the pet management server 300.

**FIG. 11** illustrates that the first pet 201_1 by the name of "Kitty Pang" incorrectly wears the second pet device 200_2 and the second pet 201_2 by the name of "Kitty Pearl" incorrectly wears the first pet device 200_1.

The pet toilet 100 may transmit a device identifier 1107 and a measured weight 1109 received from each of the first pet device 200_1 and the second pet device 200_2 to the pet management server 300.

In this case, the device identifier 1107 received from the first pet device 200_1 may be "CAT_1" and the weight 1109 of the pet wearing the first pet device 200_1 measured in the pet toilet 100 may be 1.6 kg. Also, the device identifier 1107 received from the second pet device 200_2 may be "CAT_2" and the weight 1109 of the pet wearing the second pet device 200_2 measured in the pet toilet 100 may be 3.9 kg.

In this case, the pet management server 300 may determine whether the device is correctly worn by comparing the measured weight 1109 with the stored weight 1103 matched with the previously stored device identifier 1105.

That is, since the weight of the first pet 201_1 identified as the second pet 201_2 is more similar to the weight of the second pet 201_2 than that of the first pet 201_1, the pet management server 300 may re-identify the second pet 201_2 as the first pet 201_1. Therefore, a device identifier 1111 or a measured weight 1113 may be exchanged and stored.

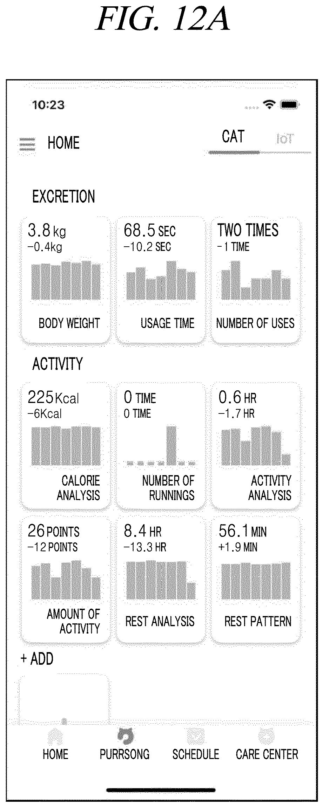

**FIG. 12A** to **FIG. 12D** are diagrams showing an example of an application provided by a user device according to an embodiment of the present disclosure.

Referring to **FIG. 12A**, the user device 400 may display excretion information and activity information. In this case, the user device 400 may display each item in a graph. Herein, the excretion information may include a body weight, a usage time and the number of uses. Also, the activity information may include calorie analysis, the number of runnings, activity analysis, the amount of activity, rest analysis and a rest pattern.

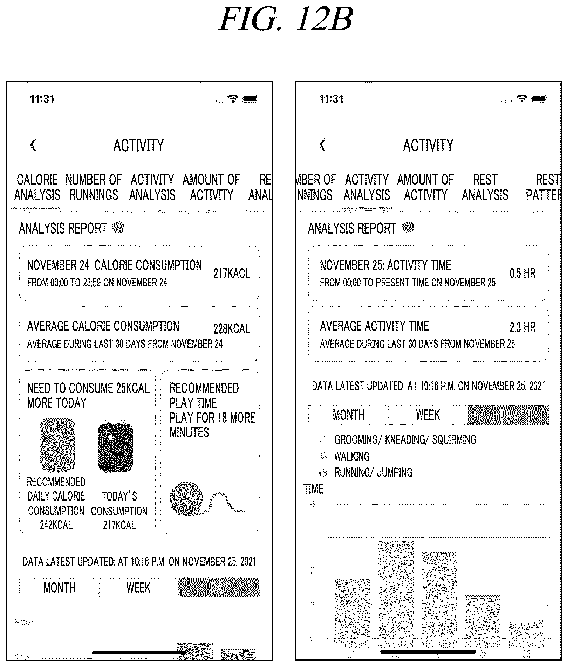

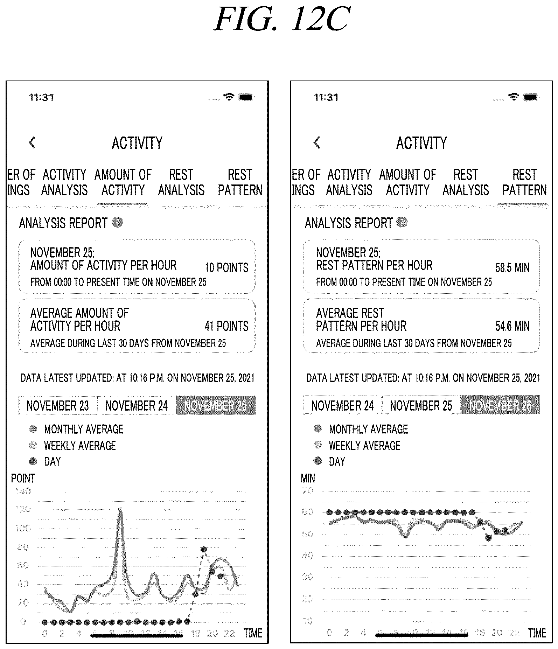

Referring to **FIG. 12B** and **FIG. 12C**, the user device 400 may display the calorie analysis, the activity analysis and the result of analysis on the amount of activity and the rest pattern in the activity information.

The calorie analysis information may include calorie consumption in a day, average calorie consumption during the last month and recommended daily calorie consumption.

The activity analysis information may include activity time in a day and average activity time during the last month, and may provide daily, weekly and monthly graphs showing the analyzed time for grooming/ kneading/ squirming, walking and running/jumping.

The activity information may include information provided by scoring the amount of activity in a day and the average amount of activity during the last month.

The rest pattern information may include a rest time in a day and an average rest time during the last month.

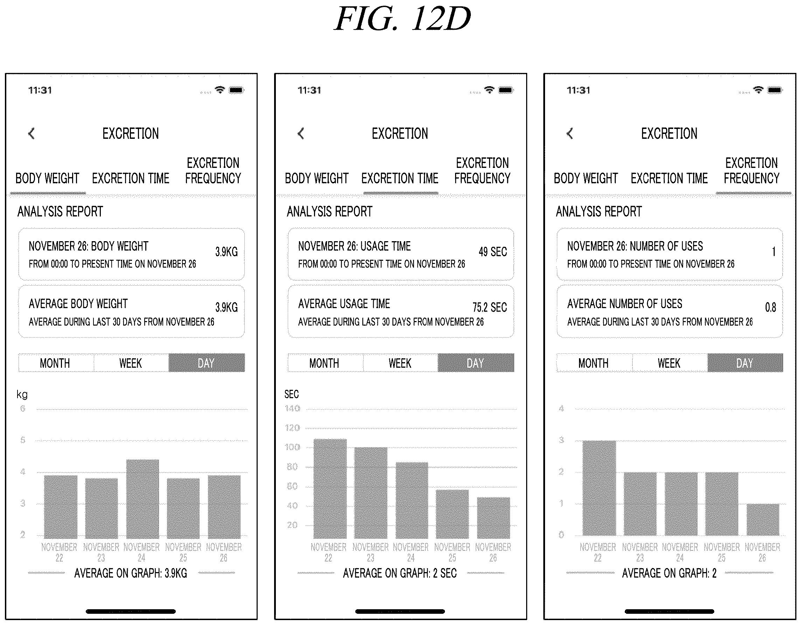

Referring to **FIG. 12D**, the user device 400 may display the result of analysis on body weight information, excretion time information and excretion frequency information in the excretion information.

The body weight information may include the average weight measured during a day and the average weight measured during the last month. Changes in weight can be seen from daily, weekly and monthly graphs.

The excretion time information may include a toilet usage time measured in a day and an average toilet usage time during the last month.

The excretion frequency information may include an average number of uses of the toilet measured during a day and an average number of uses of the toilet during the last month.

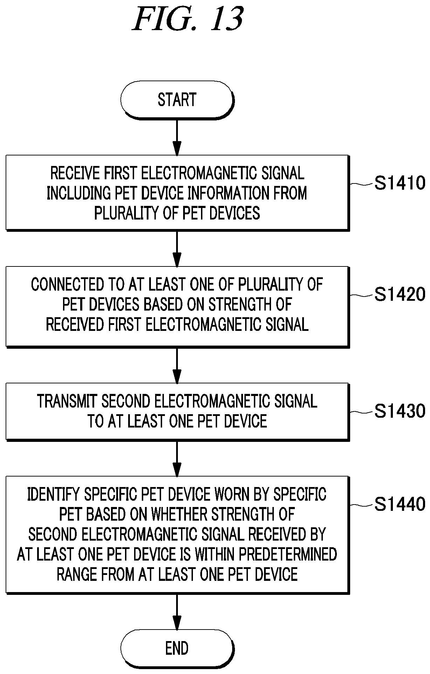

**FIG. 13** is a flowchart showing a method of identifying a pet device by a pet toilet according to an embodiment of the present disclosure. The method of identifying a pet device by the pet toilet 100 illustrated in **FIG. 13** includes the processes time-sequentially performed according to the embodiment illustrated in **FIG. 1** to **FIG. 12****.** Therefore, the above descriptions of the processes may also be applied to the method of identifying a pet device by the pet toilet 100 according to the embodiment illustrated in **FIG. 1** to **FIG. 12**, even though they are omitted hereinafter.

In a process S1410, the pet toilet 100 may receive a first electromagnetic signal including pet device information from a plurality of pet devices.

In a process S1420, the pet toilet 100 may be connected to at least one of the plurality of pet devices based on the strength of the received first electromagnetic signal.

In a process S1430, the pet toilet 100 may transmit a second electromagnetic signal to the at least one pet device.

In a process S1440, the pet toilet 100 may identify a specific pet device worn by a specific pet from the pet device information based on whether the strength of the second electromagnetic signal received by the at least one pet device is within a predetermined range from the at least one pet device.

In the descriptions above, the processes S1410 to S1440 may be divided into additional processes or combined into fewer processes depending on an exemplary embodiment. In addition, some of the processes may be omitted and the sequence of the processes may be changed if necessary.

The operation method of the pet toilet 100 described above with reference to **FIG. 1** to **FIG. 13** can be implemented as a computer program stored in a medium to be executed by a computer or a storage medium including instructions executable by a computer. Also, the operation method of the pet toilet 100 described above with reference to **FIG. 1** to **FIG. 13** can be implemented as a computer program stored in a medium to be executed by a computer.

A computer-readable medium can be any usable medium which can be accessed by the computer and includes all volatile/non-volatile and removable/non-removable media. Further, the computer-readable medium may include computer storage medium. The computer storage medium includes all volatile/non-volatile and removable/non-removable media embodied by a certain method or technology for storing information such as computer-readable instruction code, a data structure, a program module or other data.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

### EXPLANATION OF REFERENCE NUMERALS

100: Pet toilet
110: Electromagnetic signal receiver
120: Connection unit
130: Electromagnetic signal transmitter
140: Identification unit
150: Movement information transmitter
160: Weight measurement unit
200: Pet device
210: Movement measurement unit
220: Electromagnetic signal transmitter
230: Connection unit
240: Electromagnetic signal receiver
250: Electromagnetic signal strength transmitter
300: Pet management server
400: User device

## Claims

1. A pet toilet that identifies a pet device by using the pet device worn by a pet, comprising:
an electromagnetic signal receiver that receives a first electromagnetic signal including pet device information from a plurality of pet devices;
a connection unit that is connected to at least one of the plurality of pet devices based on strength of the received first electromagnetic signal;
an electromagnetic signal transmitter that transmits a second electromagnetic signal to the at least one pet device; and
an identification unit that identifies a specific pet device worn by a specific pet from the pet device information based on the strength of the second electromagnetic signal received by the at least one pet device from the at least one pet device.

2. The pet toilet of Claim 1, further comprising:
a shielding space formed by shielding surfaces that shield electromagnetic signals except a first side surface among a plurality of side surfaces;
an antenna located inside the shielding space and including the electromagnetic signal transmitter; and
a main board located outside the shielding space and including the electromagnetic signal receiver, the connection unit and the identification unit,
wherein the antenna is located on a first surface among a top surface and a bottom surface and transmits the second electromagnetic signal in a direction from the first surface toward a second surface among the top surface and the bottom surface.

3. The pet toilet of Claim 1, further comprising:
a shielding space formed by a plurality of side surfaces serving as shielding surfaces that shield electromagnetic signals;
an antenna located inside the shielding space and including the electromagnetic signal transmitter; and
a main board located inside the shielding space and including the electromagnetic signal receiver, the connection unit and the identification unit,
wherein the antenna is located on a first surface among a top surface and a bottom surface and transmits the second electromagnetic signal in a direction from the first surface toward a second surface among the top surface and the bottom surface.

4. The pet toilet of any one of Claims 1 to 3,
wherein the pet device information includes at least one of an identifier of a pet device, whether the pet device has been registered, whether the pet device operates normally and the number of movement recording data.

5. The pet toilet of any one of Claims 1 to 4,
wherein the electromagnetic signal receiver further includes a movement information transmitter that receives a third electromagnetic signal including movement information from the identified specific pet device and transmits excretion information of the specific pet and the movement information to a pet management server.

6. The pet toilet of any one of Claims 1 to 5, further comprising:
a weight measurement unit that measures the weight of the pet by means of a weight sensor.

7. The pet toilet of Claim 5,
wherein when excretion information of a first pet identified as the specific pet is more similar to an excretion pattern of a second pet than that of the first pet, the second pet is re-identified as the specific pet.

8. The pet toilet of Claim 6,
wherein when the weight of a first pet identified as the specific pet is more similar to the weight of a second pet than that of the first pet, the second pet is re-identified as the specific pet.

9. The pet toilet of Claim 7 or Claim 8,
wherein for a predetermined period of time after the second pet is re-identified as the specific pet, movement information of the first pet and movement information of the second pet are exchanged and stored.

10. A method of identifying a pet device by using the pet device worn by a pet and a pet toilet, comprising:
receiving a first electromagnetic signal including pet device information from a plurality of pet devices;
connecting to at least one of the plurality of pet devices based on strength of the received first electromagnetic signal;
transmitting a second electromagnetic signal to the at least one pet device; and
identifying a specific pet device worn by a specific pet from the pet device information based on the strength of the second electromagnetic signal received by the at least one pet device from the at least one pet device.

11. The method of identifying a pet device of Claim 10, further comprising:
measuring a weight of the pet by means of a weight sensor.

12. The method of identifying a pet device of Claim 11,
wherein the process of identifying a specific pet includes:
re-identifying a second pet as the specific pet when the weight of a first pet identified as the specific pet is more similar to the weight of the second pet than that of the first pet.

13. A pet device worn by a pet, comprising:
an electromagnetic signal transmitter that transmits a first electromagnetic signal including pet device information to a pet toilet;
a connection unit that is connected to the pet toilet in response to a request for connection from the pet toilet;
an electromagnetic signal receiver that receives a second electromagnetic signal from the pet toilet; and
an electromagnetic signal strength transmitter that transmits the strength of the second electromagnetic signal received from the pet toilet,
wherein the pet device worn by the pet is specified from the pet device information based on the strength of the second electromagnetic signal, and
the pet using the pet toilet is identified based on the pet device information.

14. The pet device of Claim 13,
wherein the electromagnetic signal transmitter transmits the first electromagnetic signal to the pet toilet at a first time interval before connection to the pet toilet, and transmits a third electromagnetic signal to the pet toilet at a second time interval, which is shorter than the first time interval, after connection to the pet toilet.

15. The pet device of Claim 14,
wherein the pet device information includes at least one of an identifier of the pet device, whether the pet device has been registered, whether the pet device operates normally and the number of movement recording data.
